# EUROPEAN PATENT APPLICATION

(11) **EP 4 786 841 A1**
(43) Date of publication of application: **05.08.2026**
(21) Application number: 25179470.7
(22) Date of filing: 28.05.2025
(51) Int. Cl.: F16M 11/24, A47C 9/10, F16M 11/28, F16M 13/08, A45B 5/00

(54) **TRIPOD SUPPORT DEVICE WITH AN OPERATION SYNCHRONIZING MECHANISM**

(30) Priority: 04.02.2025 TW 114104037
(71) Applicant: Step2Gold Co., Ltd, 403506 Taichung City (TW)
(72) Inventor: PAO, Chih-Ting, 40751 Taichung City (TW)
(74) Representative: V.O.

(57) **Abstract**

A tripod support device includes a pivot seat unit (1), three support rods (201), each pivotably extending through the pivot seat unit (1) at a pivot portion to terminate at upper and lower end portions (22, 23). The upper end portions cooperatively define a carrying surface (S) when the support rods is in an unfolded state. A synchronizing seat (31) is disposed among the support rods (201) and movable relative to the pivot seat unit (1) along a central axis (L), and has a hub (301) and three linking protrusions (302). Three lower linking bars (34) are pivotably connected with the linking protrusions (302) and lower pivot portions (24) of the support rods (201) to turn the support rods (201) during movement of the synchronizing seat (31). In the unfolded state, the lengthwise axis (X1) of each lower linking bar (34) is offset from the central axis (L).

## Description

The disclosure relates to a tripod support device, and more particularly to a tripod support device with an operation synchronizing mechanism.

Tripod support devices serve a variety of purposes, such as supporting cameras, phones, and measuring equipment, and may be mounted with a seat board for sitting. A conventional tripod as disclosed in CN220523748U includes a support seat, a central shank extending downwardly from the support seat, three pivot protrusions protruding radially from the support seat, three legs having upper ends respectively and pivotably connected with the pivot protrusions about pivot axles that extend in a tangential direction of the support seat, a slide ring movably sleeved around the central shank, three linking bars pivotably connected between the slide ring and the legs, and three pivot assemblies, each including two pivot heads which are respectively disposed on the slide ring and the corresponding leg, and two pivot pins which extend in a tangential direction of the slide ring through the pivot heads and the corresponding linking bar.

In use, the slide ring is operably moved downwardly to spread the linking bars such that lower ends of the legs are synchronously moved away from the central shank so as to stand on the ground. Hence, with the movement of the slide ring, the legs are unfolded or folded through the linking bars. However, each leg has the upper end pivotably connected with the support seat, and the dimension of the support seat and the upper carrying surface thereof is reduced for minimizing the folded size of the tripod, so the tripod may only support smaller equipment such as cameras, phones, etc. Moreover, during the movement of the slide ring and the synchronous unfolding movement of the legs, the extending axes of the linking bars are oriented to the central axis of the central shank such that the range for turning the linking bars is limited so the unfolding action of the legs is not smooth.

Therefore, an object of the disclosure is to provide a tripod support device that can alleviate at least one of the drawbacks of the prior art.

According to an aspect of the disclosure, there is provided a tripod support device according to claim 1.

During the turning of the upper end portions and the lower end portions of the support rods from the folded state to the unfolded state, the lower linking bars are smoothly turned relative to the synchronizing seat and the support rods so that the operation of unfolding the support rods is smooth.

Other features and advantages of the disclosure will become apparent in the following detailed description of the embodiments with reference to the accompanying drawings. It is noted that various features may not be drawn to scale.
FIG. 1 is a perspective view illustrating a first embodiment of a tripod support device according to the disclosure in an unfolded state.
FIG. 2 is a perspective view illustrating the first embodiment in a folded state.
FIG. 3 is a fragmentary side view illustrating the first embodiment in the unfolded state.
FIG. 4 is a fragmentary side view illustrating the first embodiment in the folded state.
FIG. 5 is a sectional view taken along line V-V of FIG. 4.
FIG. 6 is a sectional view taken along line VI-VI of FIG. 5.
FIG. 7 is a sectional view taken along line VII-VII of FIG. 6.
FIG. 8 is a fragmentary bottom view of FIG. 3.
FIG. 9 is a fragmentary top view of FIG. 3.
FIG. 10 is a fragmentary side view illustrating an operation synchronizing mechanism of the first embodiment.
FIG. 11 is a sectional view similar to FIG. 7, illustrating the first embodiment in a modified form.
FIG. 12 is a sectional view similar to FIG. 7, illustrating the first embodiment in another modified form.
FIG. 13 is a perspective view illustrating a second embodiment of a tripod support device according to the disclosure in an unfolded state.
FIG. 14 is a fragmentary, exploded perspective view of the second embodiment.
FIG. 15 is a fragmentary, exploded perspective view illustrating a synchronizing seat and three lower linking bars of an operation synchronizing mechanism of the second embodiment.
FIGS. 16(A), 16(B) and 16(C) are schematic views illustrating the unfolded operation of the second embodiment.
FIG. 17 is a fragmentary perspective view illustrating a third embodiment of a tripod support device according to the disclosure in a folded state.
FIG. 18 is a fragmentary, exploded perspective view of the third embodiment.
FIG. 19 is a perspective view illustrating a fourth embodiment of a tripod support device according to the disclosure in an unfolded state.
FIG. 20 is a fragmentary, enlarged sectional view of the fourth embodiment.
FIG. 21 is a sectional view illustrating the fourth embodiment in a retracted state.

Before the disclosure is described in greater detail, it should be noted that where considered appropriate, reference numerals or terminal portions of reference numerals have been repeated among the figures to indicate corresponding or analogous elements, which may optionally have similar characteristics.

It should be noted herein that for clarity of description, spatially relative terms such as "top," "bottom," "upper," "lower," "on," "above," "over," "downwardly," "upwardly" and the like may be used throughout the disclosure while making reference to the features as illustrated in the drawings. The features may be oriented differently (e.g., rotated 90 degrees or at other orientations) and the spatially relative terms used herein may be interpreted accordingly.

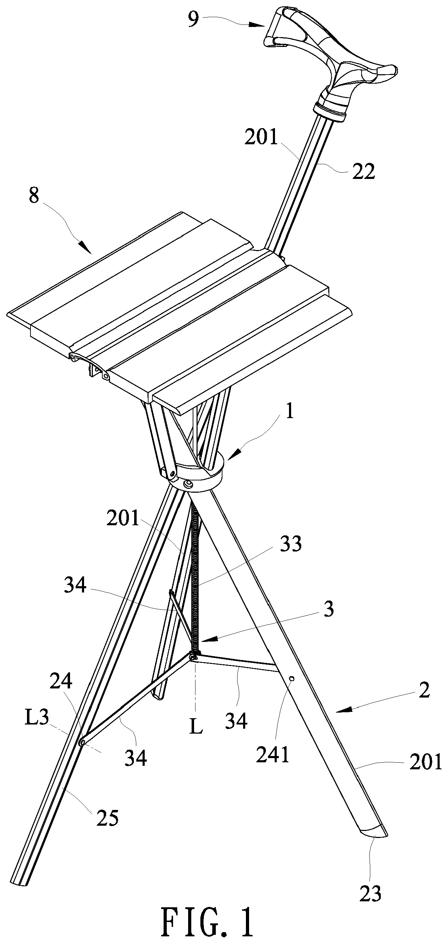

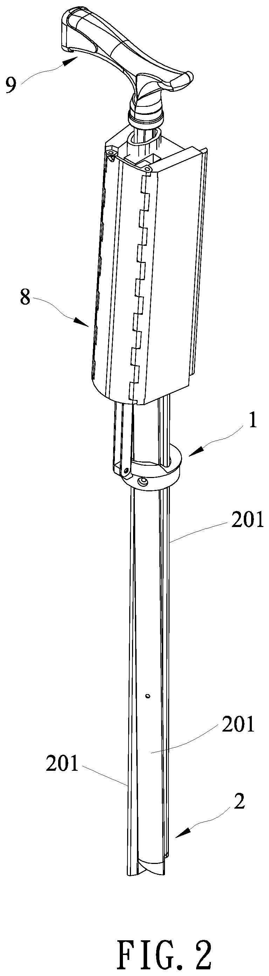

Referring to FIGS. 1 and 2, a first embodiment of a tripod support device according to the disclosure is adapted for a carrying plate 8 and a handlebar 9 to be mounted thereon. In this embodiment, the carrying plate 8 is a seat board for a user to sit thereon and the tripod support device of this embodiment is used as a folding crutch chair. The embodiment may be used for supporting cameras, phones, screen panels, etc.

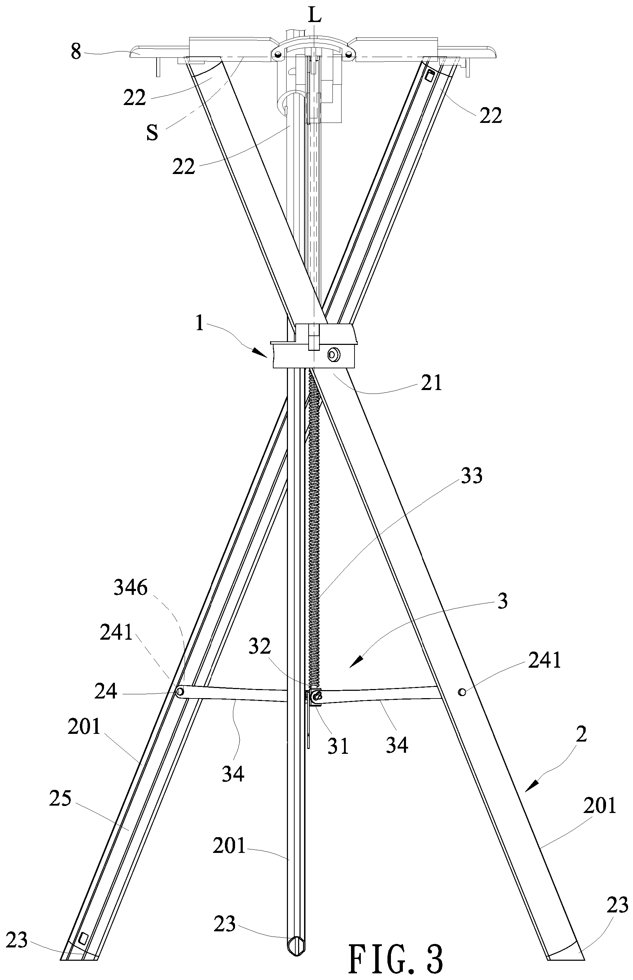

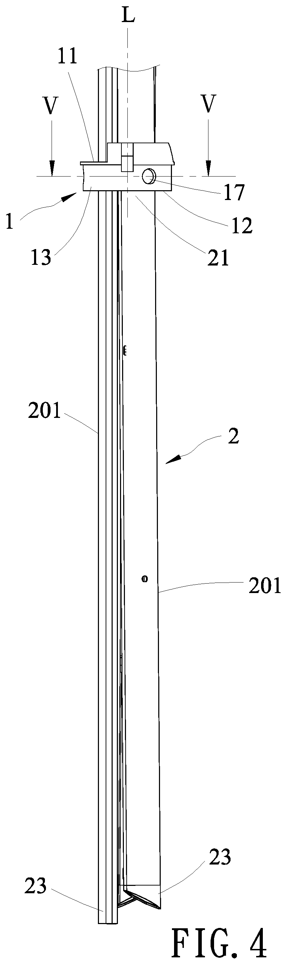

With reference to FIGS. 3 and 4, the tripod support device includes a pivot seat unit 1, a support unit 2 and an operation synchronizing mechanism 3.

With reference to FIGS. 4, 5 and 6, the pivot seat unit 1 is in the form of a short cylinder surrounding and defining a central axis (L), and includes an upper surface 11, a lower surface 12 opposite to the upper surface 11 along the central axis (L), an outer surrounding wall 13 connected between the upper surface 11 and the lower surface 12, three extending holes 14 extending through the upper and lower surfaces 11, 12 and angularly spaced apart from one another about the central axis (L), three pivot axles 17 respectively extending through the extending holes 14 and angularly spaced apart from one another about the central axis (L), and a receiving groove 16 recessed from the lower surface 12 to be opened downwardly. Each extending hole 14 is defined by a hole surrounding wall 15 which has a restraint wall section 151 proximal to the central axis (L), and two end wall sections 152 respectively connected with two ends of the restraint wall section 151.

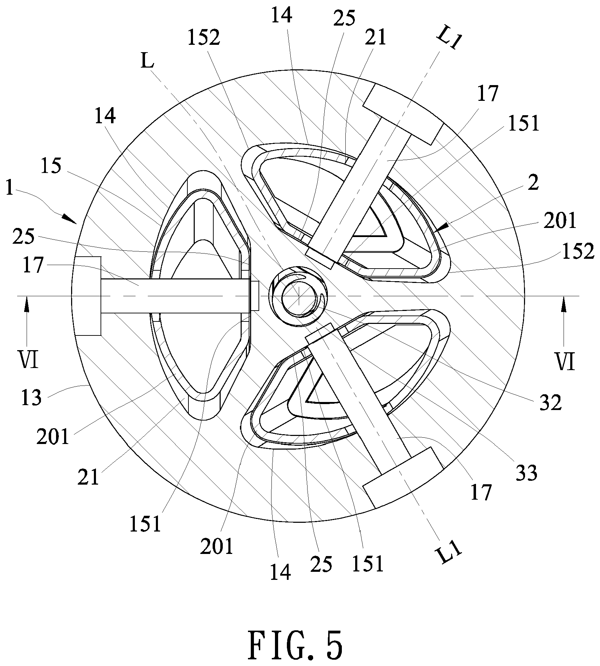

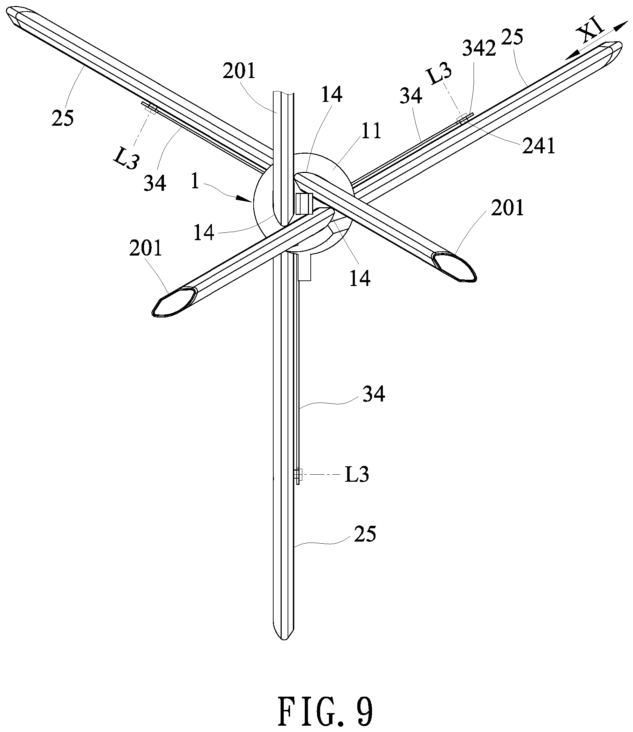

The support unit 2 is pivotably connected with the pivot seat unit 1, and includes three support rods 201, each of which pivotably extends through a respective one of the extending holes 14 to terminate at an upper end portion 22 and a lower end portion 23 opposite to each other, and which are angularly spaced apart from one another about the central axis (L). Each support rod 201 has a pivot portion 21 which is pivotably engaged with a respective one of the pivot axles 17 and interposed between the upper end portion 22 and the lower end portion 23, a lower pivoting portion 24 which is interposed between the pivot portion 21 and the lower end portion 23, and a rod surface 25 which faces the restraint wall section 151 of the corresponding extending hole 14. The pivot portion 21 is pivotably turned along the corresponding restraint wall section 151 between the end wall sections 152. As shown in FIG. 9, the lower pivoting portion 24 of each support rod 201 has a pivot shaft 241 which is mounted on and extends radially from the corresponding support rod 201 and which extends along a shaft axis (L3) that is normal to the rod surface 25. Each pivot axle 17 extends along a turning axis (L1) which is perpendicular to both the central axis (L) and the corresponding rod surface 25 (see FIG. 5). The upper end portions 22 and the lower end portions 23 of the support rods 201 are turnable between a folded state, where the upper end portions 22 and the lower end portions 23 are close to the central axis (L), and an unfolded state, where the upper end portions 22 and the lower end portions 23 are remote from the central axis (L), and the upper end portions 22 cooperatively define a carrying surface (S) in the unfolded state (see FIG. 3).

With reference to FIGS. 3, 6 and 7, the operation synchronizing mechanism 3 is connected with the support rods 201, and includes a synchronizing seat 31, an extending stem 32, a biasing member 33 and three lower linking bars 34.

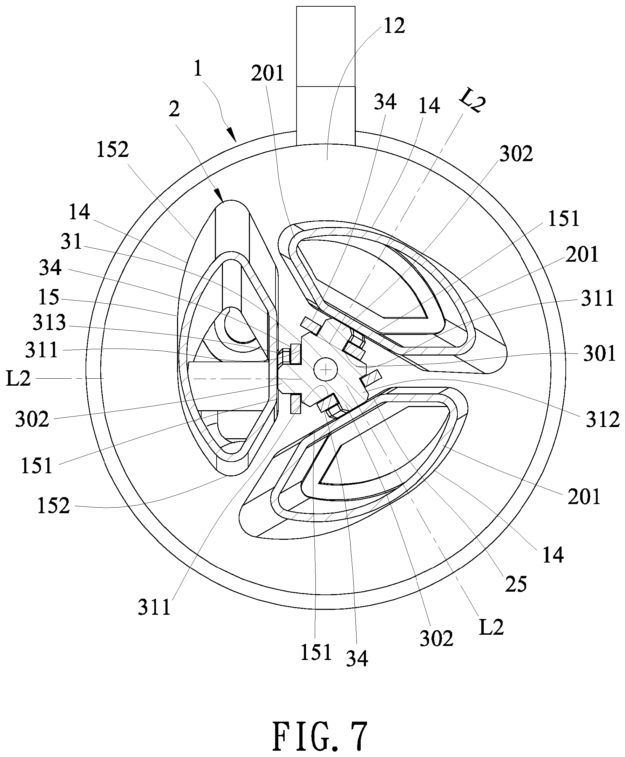

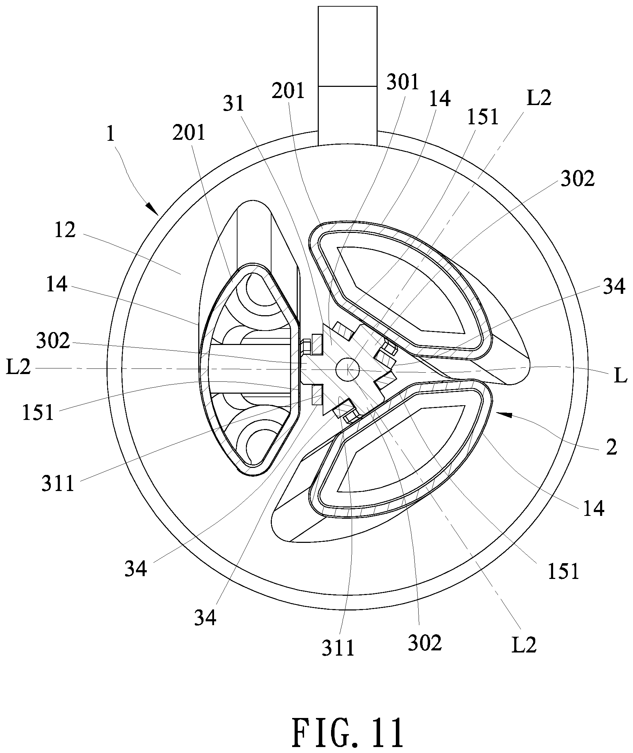

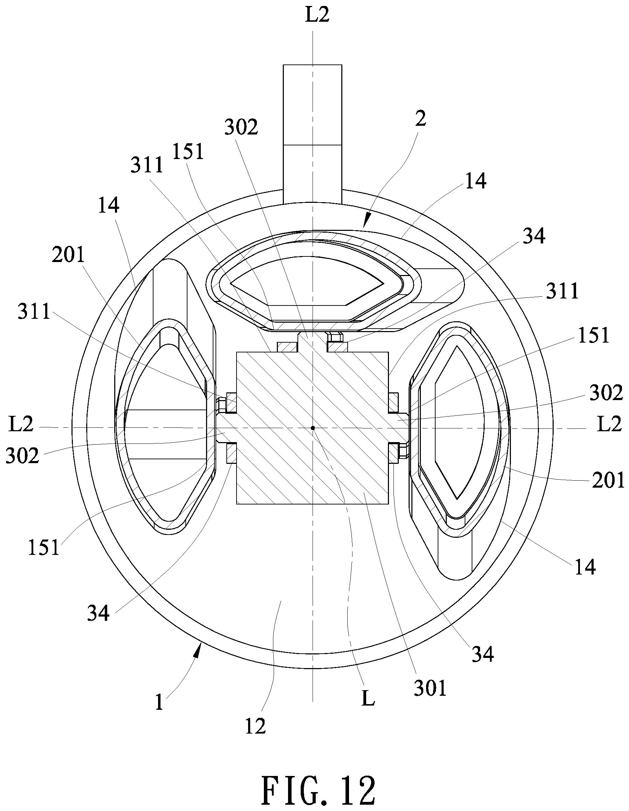

With reference to FIGS. 7, 8 and 10, the synchronizing seat 31 is disposed downwardly of the pivot seat unit 1 among the support rods 201, and has a hub 301 and three linking protrusions 302 which protrude from the hub 301 and are angularly spaced apart from one another about the central axis (L). The hub 301 has a triangular cross-section, and has a plurality of surrounding wall sections 311 which respectively face the rod surfaces 25 of the support rods 201 and are angularly spaced apart from one another about the central axis (L). Each linking protrusion 302 has a linking pin 312 which extends from the hub 301 along a pivot axis (L2) and through the corresponding lower linking bar 34, and a stop portion 313 which is connected with and extends upwardly from a distal end of the linking pin 312. Referring to FIG. 7, in the embodiment, the pivot axis (L2) of each linking protrusion 302 is offset from the central axis (L). In other modified embodiments, as shown in FIG. 11, the hub 301 has a triangular cross-section while the pivot axes (L2) of the linking protrusions 302 intersect the central axis (L). Alternatively, as shown in FIG. 12, the hub 301 has a rectangular cross-section, and the pivot axes (L2) of the linking protrusions 302 intersect the central axis (L).

The extending stem 32 has a lower end connected with the synchronizing seat 31, and extends along the central axis (L) toward the carrying plate 8 to have an upper end connected with the carrying plate 8. Hence, pulling of the carrying plate 8 results in movement of the extending stem 32 along the central axis (L).

The biasing member 33 is compressibly sleeved around the extending stem 32, and has upper and lower ends abutting against the pivot seat unit 1 and the synchronizing seat 31, respectively. The upper end of the biasing member 33 is received and held in the receiving groove 16 to provide a biasing action urging the synchronizing seat 31 downwardly away from the pivot seat unit 1.

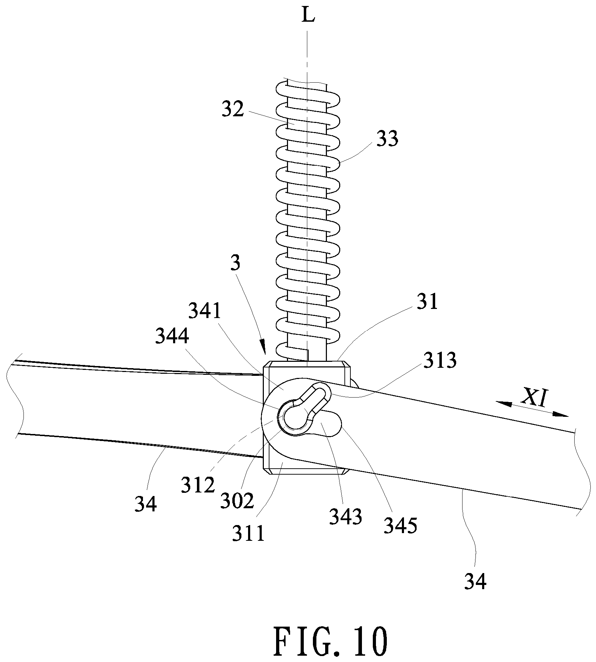

With reference to FIGS. 7, 8 and 9, each lower linking bar 34 has a first linking end 341 which is pivotably connected with the respective linking protrusion 302, and a second linking end 342 which is opposite to the first linking end 341 along a lengthwise axis (X1) and pivotably connected with the corresponding lower pivoting portion 24. Referring to FIG. 10, the first linking end 341 of each lower linking bar 34 has a first pivot hole 343 for passing of the corresponding linking protrusion 302. The first pivot hole 343 is in the form of an elongated hole which has an enlarged pivot section 344 adapted for the linking pin 312, and a hook section 345 opposite to the enlarged pivot section 344 along the lengthwise axis (X1) adapted for the stop portion 313. Referring to FIG. 3, the second linking end 342 of each lower linking bar 34 has a second pivot hole 346.

During movement of the synchronizing seat 31 along the central axis (L) relative to the pivot seat unit 1, the upper end portions 22 and the lower end portions 23 of the support rods 201 are brought by the lower linking bars 34 to be turned between the folded state and the unfolded state. In the unfolded state, the lengthwise axis (X1) of each of the lower linking bars 34 is offset from the central axis (L).

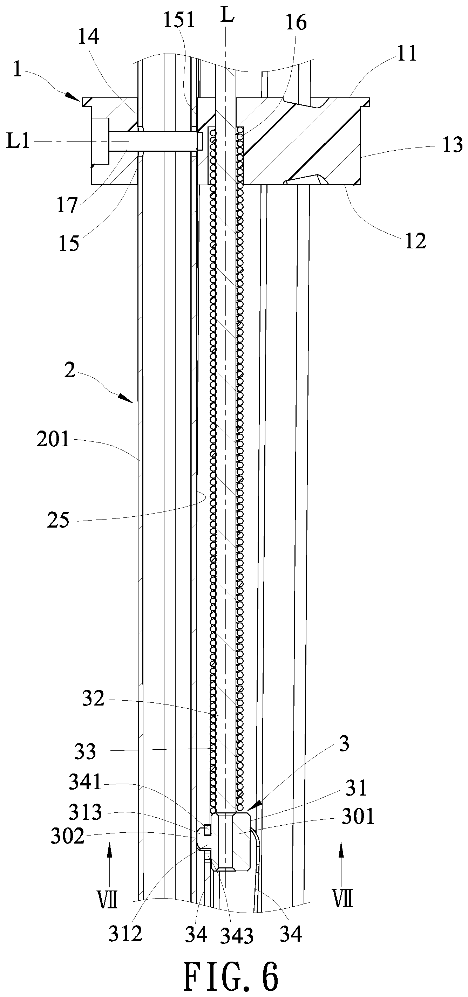

Specifically, referring to FIGS. 3, 4, 6 and 8, the support rods 201 are turnable relative to the pivot seat unit 1 between a folded position (see FIG. 4) and a spread position (see FIG. 3). In the folded position, as shown in FIGS. 4 and 6, the upper end portions 22 of the support rods 201 are close to the central axis (L), the lower end portions 23 of the support rods 201 are close to the central axis (L), the synchronizing seat 31 is adjacent to the pivot seat unit 1, and the lengthwise axis (X1) of each lower linking bar 34 substantially extends along the central axis (L).

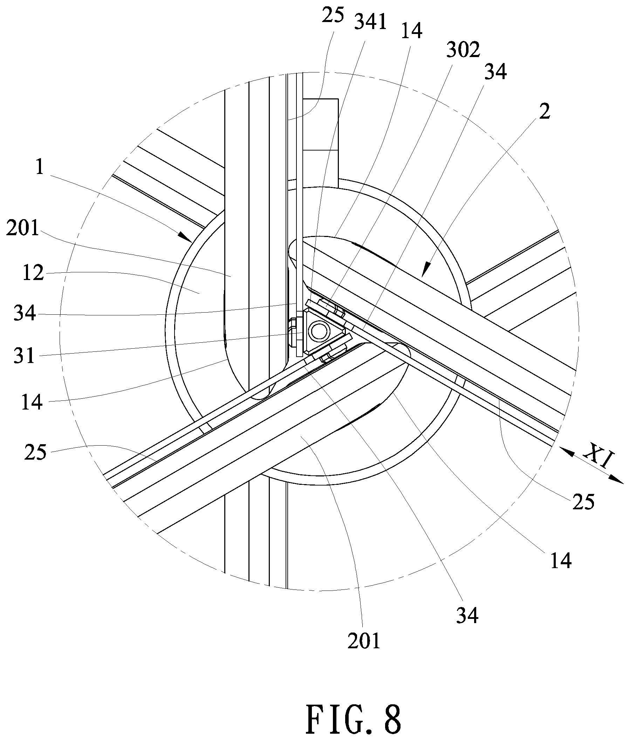

In the spread position, as shown in FIGS. 3 and 8, the upper end portions 22 of the support rods 21 are remote from the central axis (L) to cooperatively define the carrying surface (S), the lower end portions 23 of the support rods 21 are remote from the central axis (L), the synchronizing seat 31 is remote from the pivot seat unit 1, and each lower linking bar 34 is inclined relative to the corresponding support rod 201 and the extending stem 32. The carrying plate 8 is disposed on the carrying surface (S). The upper end of the extending stem 32 is connected with the carrying plate 8.

In the embodiment, as shown in FIG. 5, the turning axis (L1) of each pivot axle 17 is substantially perpendicular to both the central axis (L) and the corresponding rod surface 25. In the spread position of the support rods 201, the upper end portions 22 are misaligned with and do not interfere with one another, and cooperatively define the carrying surface (S) with a greater area, as compared with the conventional tripod where the upper end of the support legs pivotably connected with the support seat and the carrying surface defined by the upper ends and the support seat has a smaller area. Moreover, in the conventional tripod, each pivot axle extends in the tangential direction of the support seat through the corresponding leg and the pivot protrusion so that the upper ends of the legs which project from the support seat might interfere with each other during the operation of the tripod. Moreover, each pivot head projects from the slide ring and the corresponding leg and the pivot pin extends in the tangential direction of the slide ring through the pivot head and the corresponding linking bar. Unlike the conventional tripod, in the embodiment, each pivot axis (L2) is perpendicular to a direction of the central axis (L), and extends normal to the corresponding surrounding wall section 311 of the hub 301 (see FIG. 7), and each shaft axis (L3) extends normal to the rod surface 25 of the corresponding support rod 201. That is to say, each pivot axis (L2) and each shaft axis (L3) extend in the width direction of the lower linking bar 34 through the lower linking bar 34. Thus, the lower linking bars 34 are moved and spread in a non-interfering manner along with the support rods 201 to the spread position, and the structural strength of the support rods 201 in the spread position is increased. In addition, the gap between the synchronizing seat 31 and each support rod 201 in the folded position is minimized so the tripod support device is more compact. Moreover, each lower linking bar 34 is intimately attached to and turnable relative to the synchronizing seat 31. Hence, the lower linking bars 34 may be made with smaller thickness and smaller width so as to reduce the size and weight thereof.

In the embodiment, with the extending stem 32 extending upwardly from the synchronizing seat 31 and connected with the carrying plate 8 on the carrying surface (S), pulling of the carrying plate 8 brings the synchronizing seat 31 to move along the central axis (L), and brings the lower linking bars 34 to synchronously turn to unfold or fold the support rods 201, which is convenient to use. When it is desired to unfold the support rods 201, one of the support rods 201 is operably turned outwardly relative to the pivot seat unit 1, which brings one lower linking bar 34 to be turned and the synchronizing seat 31 to be moved downwardly while the other two support rods 201 are turned and spread synchronously. Each support rod 201 and each lower linking bar 34 are turned relative to each other so as to shift the support rods 201 from the folded position to the spread position. With the biasing member 33 storing a biasing force in the folded position, when the carrying plate 8 or one support rod 201 is pulled, the biasing member 33 is released to facilitate the downward movement of the synchronizing seat 31 to spread the lower linking bars 34 so as to effortlessly shift the support rods 201 from the folded position to the spread position. In other modified embodiments, the extending stem 32, the biasing member 33 and the receiving groove 16 may be dispensed with.

In sum, with the turning axis (L1) of each pivot axle 17 substantially perpendicular to both the central axis (L) and the rod surface 25 of the corresponding support rod 201, the upper end portions 22 of the support rods 201 cooperatively define a greater carrying surface (S) in the spread position so as to support a carrying plate 8 with greater size and weight (e.g. a chair board of FIG. 1). Moreover, with each pivot axis (L2) being perpendicular to the direction of the central axis (L) and extending normal to the corresponding surrounding wall section 311 of the hub 301, and each shaft axis (L3) extending normal to the rod surface 25 of the corresponding support rod 201, the lower linking bars 34 are moved and spread in a non-interfering manner along with the support rods 201, and the structural strength of the support rods 201 in the spread position is increased.

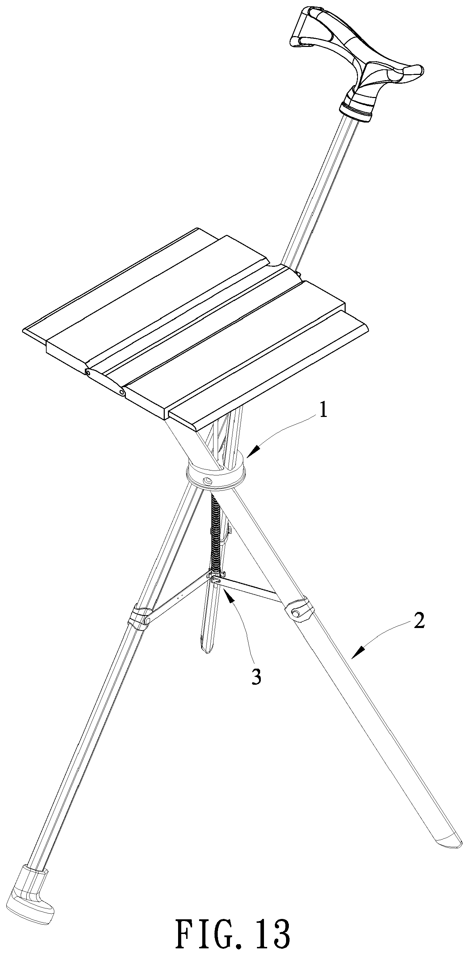

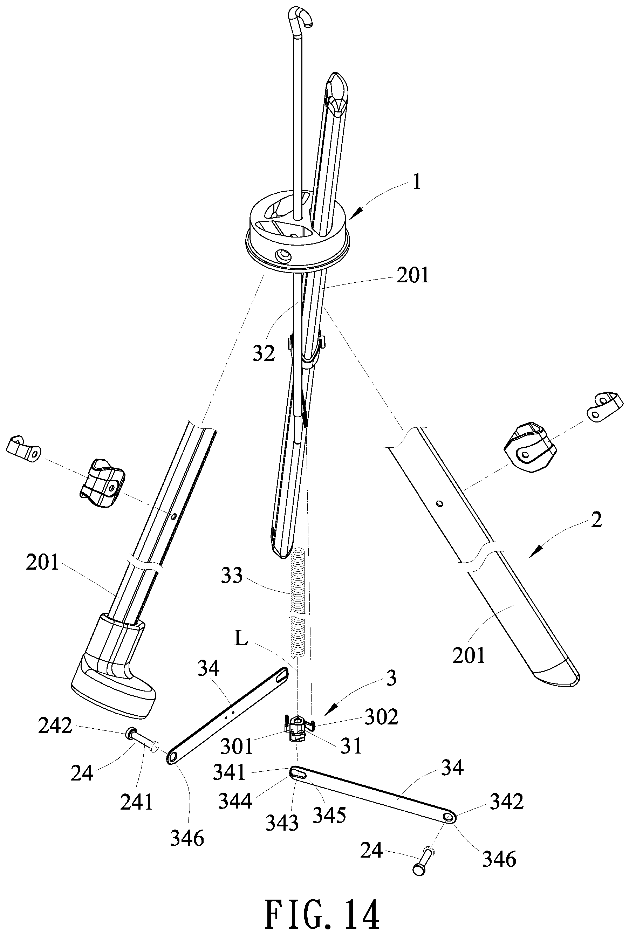

Referring to FIGS. 13 and 14, in a second embodiment, the tripod support device includes a pivot seat unit 1, a support unit 2 and an operation synchronizing mechanism 3.

The lower pivoting portion 24 of each support rod 201 of the support unit 2 has an enlarged head 242 which is formed on an end of the pivot shaft 241.

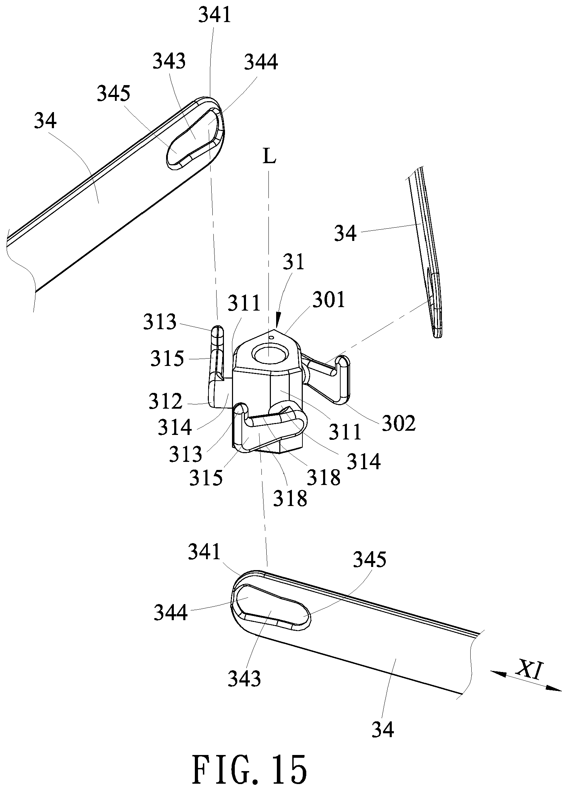

The operation synchronizing mechanism 3 includes a synchronizing seat 31, an extending stem 32, a biasing member 33 and three lower linking bars 34. The synchronizing seat 31 has a hub 301 and three linking protrusions 302 which protrude from the hub 301 and are angularly spaced apart from one another about the central axis (L). Referring to FIG. 15, the linking pin 312 of each linking protrusion 302 is L-shaped, and has a connecting end portion 314 which is connected with the corresponding surrounding wall section 311 of the hub 301, and a distal end portion 315 which extends and is bent from the connecting end portion 314 and which is connected with the stop portion 313. The stop portion 313 is formed on and extends upwardly from the distal end portion 315. The distal end portion 315 of each linking pin 312 has upper and lower slope surfaces 318 which are formed adjacent to the stop portion 313 and inclined toward each other from the distal end portion 315 toward the connecting end portion 314. The connecting end portion 314 of each linking pin 312 is in the form of a pivot pin, and extends radially from and is transverse to the corresponding surrounding wall section 311. That is to say, the distal end portion 315 extends transverse to the connecting end portion 314 to have an L-shaped profile, and the stop portion 313 extends transverse to the distal end portion 315 to have an L-shaped profile.

The first pivot hole 343 of each lower linking bar 34 is in the form of an elongated hole which has an enlarged pivot section 344 of a fan shape, and an arcuate hook section 345 opposite to the enlarged pivot section 344 along the lengthwise axis (X1). The first pivot hole 343 has an inner diameter greater than a width of the connecting end portion 314 and a width of the distal end portion 315. Specifically, the hook section 345 has an inner diameter not smaller than the width of the connecting end portion 314. The enlarged pivot section 344 has a widest portion which has an inner diameter not smaller than the width of the distal end portion 315. Referring to FIG. 14, the second linking end 342 of each lower linking bar 34 has a second pivot hole 346 which has an inner diameter greater than an outer diameter of the pivot shaft 241 and smaller than an outer diameter of the enlarged head 242.

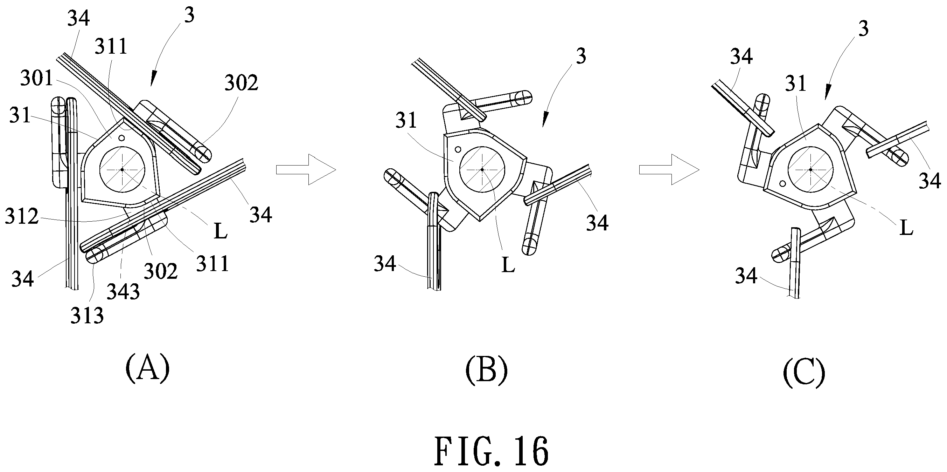

During the movement of the synchronizing seat 31 along the central axis (L) relative to the pivot seat unit 1, the lower linking bars 34 are brought to be turned relative to the synchronizing seat 31 and the corresponding support rods 201, and the first linking end 341 of each lower linking bar 34 is slidably moved onto the corresponding linking protrusion 302 and is stopped by the stop portion 313 to allow pivoting of the second linking end 342 of each lower linking bar 34 relative to the pivot shaft 241 of the lower pivoting portion 24 of the corresponding support rod 201. The second linking end 342 is prevented from removal from the pivot shaft 241 by the corresponding enlarged head 242. At the same time, referring to FIG. 14 and FIGS. 16(A), 16(B) and 16(C), with the turning of the support rods 201 about the central axis (L), the pulling of the lower linking bars 34 by the support rods 201, and the pulling of the synchronizing seat 31 by the lower linking bars 34, the synchronizing seat 31 is turned about the central axis (L). Thus, the pivoting of the support rods 201 relative to the pivot seat unit 1 is smooth.

When the support rods 201 are operated to be folded toward the central axis (L), with the slope surfaces 318 of the distal end portion 315 of each linking protrusion 302 in sliding engagement with the enlarged pivot section 344 of the first pivot hole 343 of the lower linking bars 34, the synchronizing seat 31 is turned in an opposite direction about the central axis (L) and is returned to its original angular position.

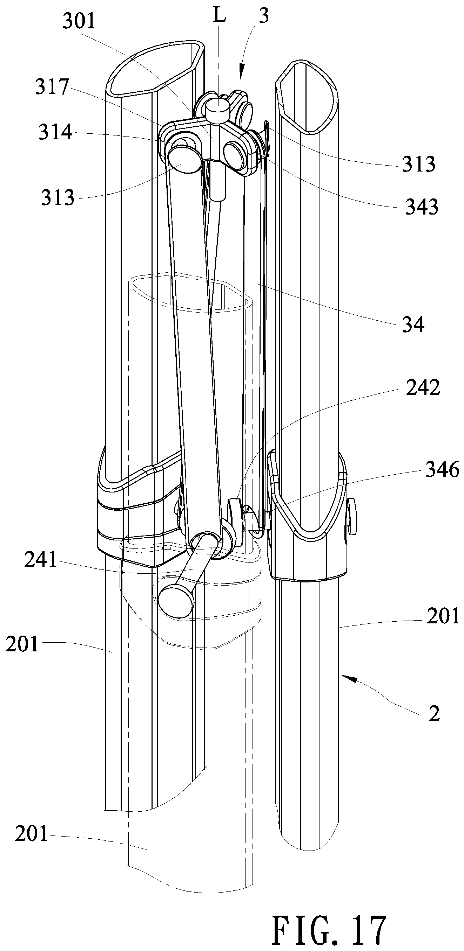

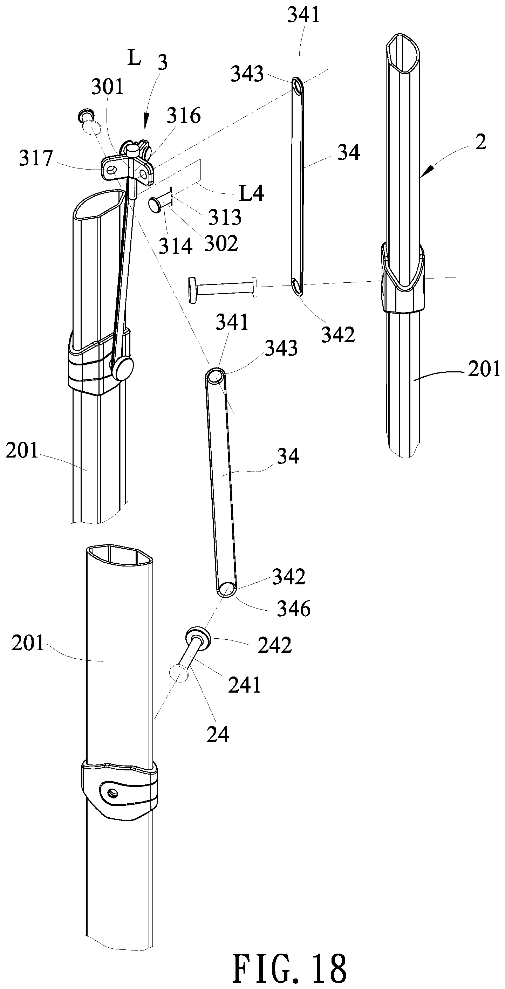

With reference to FIGS. 17 and 18, in a third embodiment, the hub 301 of the operation synchronizing mechanism 3 has a surrounding wall 316 which surrounds the central axis (L), and at least three pivot lugs 317 which extend radially from the surrounding wall 316 and are angularly spaced apart from one another. The connecting end portion 314 of each linking protrusion 302 is in the form of a pivot pin which is pivotably connected with and extends transverse to the corresponding pivot lug 317. The stop portion 313 is disposed opposite to the connecting end portion 314 along a central line (L4) that is substantially perpendicular to a direction of the central axis (L). The stop portion 313 is in the form of a disc which has a disc surface slightly inclined relative to the central line (L4). The first linking end 341 of each lower linking bar 34 has a first pivot hole 343 which is in the form of a circular hole having an inner diameter greater than a width of the connecting end portion 314 but smaller than an outer diameter of the disc surface of the stop portion 313.

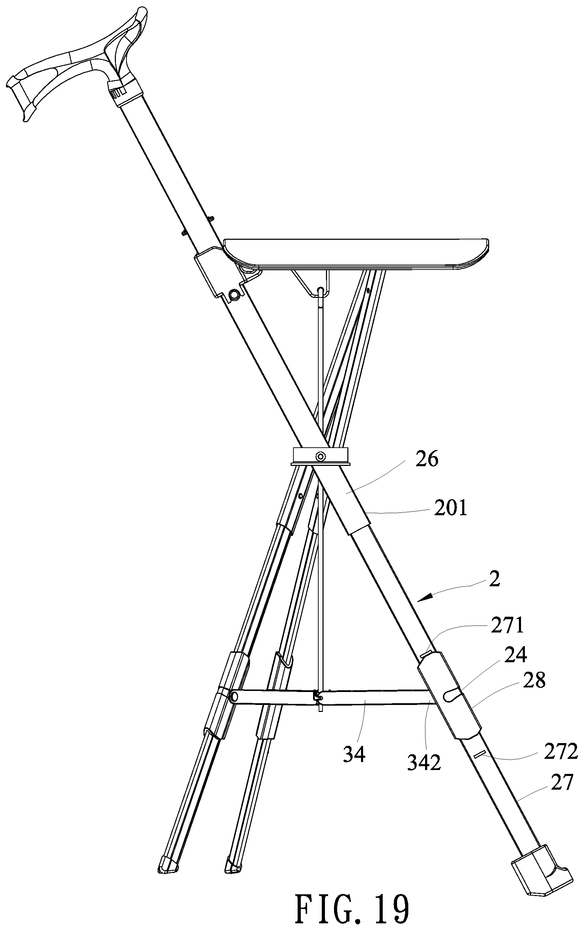

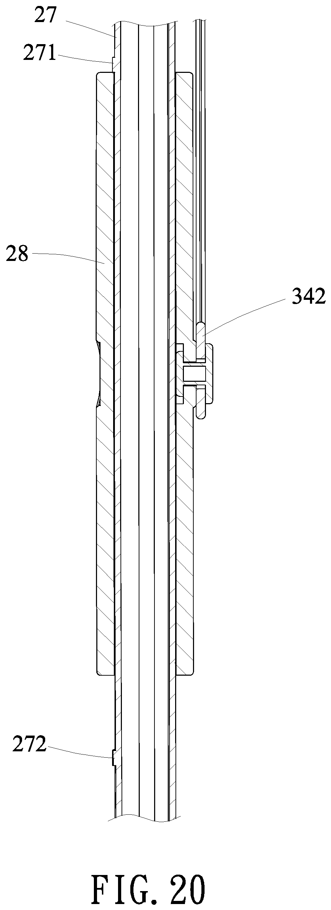

With reference to FIGS. 19 and 20, in a fourth embodiment, each of the support rods 201 of the support unit 2 has an upper tube 26, a lower tube 27 telescopically engaged with the upper tube 26, and a protective sleeve 28 slidably sleeved around the lower tube 27. The lower pivoting portion 24 is formed on the corresponding protective sleeve 28 such that the second linking end 342 of each of the lower linking bars 34 is pivotably connected with the protective sleeve 28. The lower tube 27 of each support rod 201 has two abutting protrusions 271, 272 to limit sliding movement of the protective sleeve 28 relative to the lower tube 27. The lower tube 27 is shiftable relative to the upper tube 26 between an extended state and a retracted state. The lower tube 27 is retained relative to the upper tube 26 in the extended state in a known manner, such as a biasing pin and a hole.

When the support rods 201 are operated to turn from the folded position to the spread position, and when the support rods 201 are operated to turn from the spread position to the folded position, the lower linking bars 34 are brought to synchronously turn to unfold or fold the support rods 201. Each lower linking bar 34 brings the corresponding protective sleeve 28 to move along the corresponding lower tube 27 and the movement of the protective sleeve 28 is limited by the abutting protrusions 271, 272. When the support rods 201 are in the spread position, each protective sleeve 28 abuts against and is stopped by the upper abutting protrusion 271.

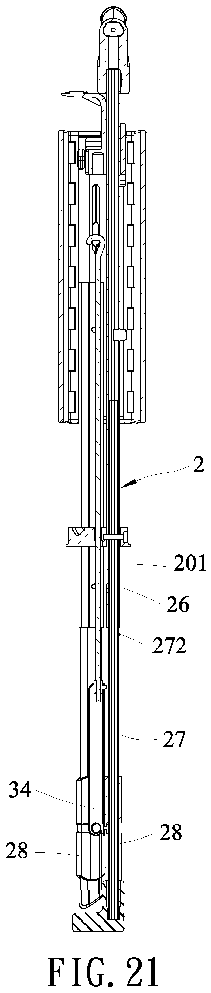

Referring to FIG. 21, when the support rods 201 are in the folded position, each lower tube 27 is retractable into the corresponding upper tube 26. During the retraction of the lower tube 27, the abutting protrusions 271, 272 are forced and pass through the corresponding protective sleeve 28.

As illustrated, the tripod support device has a simple structure for providing a larger carrying surface, and the operation of folding and unfolding of the support rods 201 is smooth.

In the description above, for the purposes of explanation, numerous specific details have been set forth in order to provide a thorough understanding of the embodiments. It will be apparent, however, to one skilled in the art, that one or more other embodiments may be practiced without some of these specific details. It should also be appreciated that reference throughout this specification to "one embodiment," "an embodiment," an embodiment with an indication of an ordinal number and so forth means that a particular feature, structure, or characteristic may be included in the practice of the disclosure. It should be further appreciated that in the description, various features are sometimes grouped together in a single embodiment, figure, or description thereof for the purpose of streamlining the disclosure and aiding in the understanding of various inventive aspects; such does not mean that every one of these features needs to be practiced with the presence of all the other features. In other words, in any described embodiment, when implementation of one or more features or specific details does not affect implementation of another one or more features or specific details, said one or more features may be singled out and practiced alone without said another one or more features or specific details. It should be further noted that one or more features or specific details from one embodiment may be practiced together with one or more features or specific details from another embodiment, where appropriate, in the practice of the disclosure.

## Claims

1. A tripod support device, comprising:
a pivot seat unit (1) defining a central axis (L); and
a support unit (2) pivotably connected with said pivot seat unit (1), said support unit (2) including at least three support rods (201), each of which pivotably extends through said pivot seat unit (1) to terminate at an upper end portion (22) and a lower end portion (23) opposite to each other, and which are angularly spaced apart from one another about the central axis (L), each of said support rods (201) having a pivot portion (21) which is pivotably engaged with said pivot seat unit (1) and interposed between said upper end portion and said lower end portion, and a lower pivoting portion (24) which is interposed between said pivot portion (21) and said lower end portion (23), wherein said upper end portions and said lower end portions of said support rods (201) are turnable between a folded state, where said upper end portions and said lower end portions are close to the central axis (L), and an unfolded state where said upper end portions and said lower end portions are remote from the central axis (L), and said upper end portions (22) cooperatively define a carrying surface (S) in the unfolded state, **characterized by**:
an operation synchronizing mechanism (3) including a synchronizing seat (31) which is disposed among said support rods (201) and movable relative to said pivot seat unit (1) along the central axis (L), and at least three lower linking bars (34), said synchronizing seat (31) having a hub (301) and at least three linking protrusions (302) which protrude from said hub and are angularly spaced apart from one another about the central axis (L), each of said lower linking bars (34) having a first linking end (341) which is pivotably connected with a respective one of said linking protrusions (302), and a second linking end (342) which is opposite to said first linking end (341) along a lengthwise axis (X1) and pivotably connected with said lower pivoting portion (24) of a respective one of said support rods (201), wherein, during movement of said synchronizing seat (31) along the central axis (L) relative to said pivot seat unit (1), said upper end portions and said lower end portions of said support rods are brought by said lower linking bars (34) to be turned between the folded state and the unfolded state, and wherein, in the unfolded state, the lengthwise axis (X1) of each of said lower linking bars (34) is offset from the central axis (L).

2. The tripod support device of claim 1, wherein each of said linking protrusions (302) of said operation synchronizing mechanism (3) has a connecting end portion (314) which is connected with said hub (301), a distal end portion (315) which extends from said connecting end portion (314), and a stop portion (313) which is formed on and extends upwardly from said distal end portion (315) such that, during the movement of said synchronizing seat (31) along the central axis (L) relative to said pivot seat unit (1), said lower linking bars (34) are brought to be turned relative to said synchronizing seat (31) and corresponding ones of said support rods (201), and said first linking end (341) of each of said lower linking bars (34) is slidably moved onto a corresponding one of said linking protrusions (302) and is stopped by said stop portion (313) to allow pivoting of said second linking end (342) relative to said lower pivoting portion (24) of a corresponding one of said support rod (201).

3. The tripod support device of claim 1, wherein said hub (301) of said operation synchronizing mechanism (3) has a plurality of surrounding wall sections (311) which are angularly spaced apart from one another about the central axis (L), said connecting end portion (314) of each of said linking protrusions (302) being in form of a pivot pin which extends radially from a respective one of said surrounding wall sections (311), said distal end portion (315) of each of said linking protrusions (302) extending transverse to said connecting end portion (314), said stop portion (313) of each of said linking protrusions (302) extending transverse to said distal end portion (315), said first linking end (341) of each of said lower linking bars (34) having a first pivot hole (343) which has an inner diameter greater than a width of said connecting end portion (314) and a width of said distal end portion (315).

4. The tripod support device of claim 3, wherein said distal end portion (315) of each of said linking protrusions (302) of said operation synchronizing mechanism (3) has an upper slope surface (318) and a lower slope surface (318) which are formed adjacent to said stop portion (313) and inclined toward each other from said distal end portion (315) toward said connecting end portion (314), said first pivot hole (343) of each of said lower linking bars (34) being in form of an elongated hole which has an enlarged pivot section (344) and a hook section (345) opposite to said enlarged pivot section (344) along the lengthwise axis (X1), said hook section (345) having an inner diameter not smaller than the width of said connecting end portion (314), said enlarged pivot section (344) having a widest portion which has an inner diameter not smaller than the width of said distal end portion (315).

5. The tripod support device of claim 3, wherein said lower pivoting portion (24) of each of said support rods (201) of said support unit (2) has a pivot shaft (241) which is mounted on and extends radially from a corresponding one of said support rods (201), and an enlarged head (242) which is formed on an end of said pivot shaft (241), said second linking end (342) of each of said lower linking bars (34) having a second pivot hole (346) which has an inner diameter greater than an outer diameter of said pivot shaft (241) and smaller than an outer diameter of said enlarged head (242).

6. The tripod support device of claim 2, wherein said hub (301) of said operation synchronizing mechanism (3) has a surrounding wall (316) which surrounds the central axis (L), and at least three pivot lugs (317) which extend radially from said surrounding wall (316) and are angularly spaced apart from one another, said connecting end portion (314) of each of said linking protrusions (302) being in form of a pivot pin which is pivotably connected with and extends transverse to a respective one of said pivot lugs (317), said stop portion (313) being disposed opposite to said connecting end portion (314) along a central line (L4) that is perpendicular to the central axis (L), said stop portion (313) being in form of a disc which has a disc surface inclined relative to the central line (L4).

7. The tripod support device of claim 6, wherein said first linking end (341) of each of said lower linking bars (34) has a first pivot hole (343) which is in form of a circular hole having an inner diameter greater than a width of said connecting end portion (314).

8. The tripod support device of claim 6, wherein said lower pivoting portion (24) of each of said support rods (201) of said support unit (2) has a pivot shaft (241) which is mounted on and extends radially from a corresponding one of said support rods (201), and an enlarged head (242) which is formed on an end of said pivot shaft (241), said second linking end (342) of each of said lower linking bars (34) having a second pivot hole (346) which has an inner diameter greater than an outer diameter of said pivot shaft (241) and smaller than an outer diameter of said enlarged head (242).

9. The tripod support device of claim 1, further comprising a carrying plate (8) disposed on said carrying surface (S), said operation synchronizing mechanism (3) further including an extending stem (32) which extends from said synchronizing seat (31) along the central axis (L) toward said carrying plate (8), said extending stem (32) having an upper end which is connected with said carrying plate (8) such that said carrying plate (8) is pulled to synchronously turn said support rods (201) between the folded state and the unfolded state through said operation synchronizing mechanism (3).

10. The tripod support device of claim 9, wherein said operation synchronizing mechanism (3) further includes a biasing member (33) which is sleeved around said extending stem (32) and which has an upper end and a lower end abutting against said pivot seat unit (1) and said synchronizing seat (31), respectively.

11. The tripod support device of claim 10, wherein said pivot seat unit (1) has a receiving groove (16) which is opened downwardly for receiving said upper end of said biasing member (33).

12. The tripod support device of claim 1, wherein each of said support rods (201) has an upper tube (26), a lower tube (27) telescopically engaged with said upper tube (26), and a protective sleeve (28) slidably sleeved around said lower tube (27), said lower pivoting portion (24) being formed on said protective sleeve (28) such that said second linking end (342) of each of said lower linking bars (34) is pivotably connected with said protective sleeve (28), wherein said lower tube (27) is shiftable relative to said upper tube (26) between an extended state and a retracted state, and is retained relative to said upper tube (26) in the extended state.

13. The tripod support device of claim 12, wherein said lower tube (27) of each of said support rods (201) has at least one abutting protrusion (271, 272) such that said protective sleeve (28) is slided along said lower tube (27) during turning of said support rods (201) and abuts against said abutting protrusion (271, 272) in the unfolded state.
